# DEMANDE DE BREVET EUROPEEN

(11) **EP 1 681 830 A1**
(43) Date de publication de la demande: **19.07.2006**
(21) Numéro de dépôt: 05112406.3
(22) Date de dépôt: 19.12.2005
(51) Int. Cl.: H04L 29/08

(54) **Procédé et dispositif d'obtention d'informations relatives à la présence et/ou la disponibilité d'un utilisateur**

(30) Priorité: 14.01.2005 FR 0500435
(71) Demandeur: FRANCE TELECOM, 75015 Paris (FR)
(72) Inventeur: Henry, Katell, 22560 Pleumeur Bodou (FR); Roussel, Olivier, 22560 Pleumeur Bodou (FR)
(74) Mandataire: Guéné, Patrick Lucien Juan Joseph

(57) **Abrégé**

L'invention concerne un procédé et un dispositif d'obtention d'informations relatives à la présence et/ou la disponibilité d'un utilisateur.

Selon l'invention, un tel procédé comprend une phase de configuration comprenant elle même une étape d'enregistrement (31) de premiers multiplets d'informations associant chacun une identité d'utilisateur, une expression composée d'au moins un mot et au moins une information de présence et/ou disponibilité. Il comprend en outre, une phase d'utilisation comprenant les étapes suivantes, quand un utilisateur donné prononce une expression : d'obtention (32), par reconnaissance vocale, de l'identité de l'utilisateur donné et de l'expression prononcée par l'utilisateur donné ; d'identification (33) du multiplet d'informations comprenant l'identité de l'utilisateur donné et l'expression prononcée par l'utilisateur donné ; et de lecture (36) de ladite au moins une information de présence et/ou disponibilité comprise dans le premier multiplet identifié, de façon à obtenir au moins une information de présence et/ou disponibilité courante pour l'utilisateur donné.

## Description

### 1. Domaine de l'invention

Le domaine de l'invention est celui des techniques permettant d'acquérir et de fournir des informations relatives à la présence et/ou la disponibilité d'utilisateurs à des dispositifs de gestion d'informations de présence. L'invention s'applique notamment, mais non exclusivement, à la fourniture d'informations de présence et/ou disponibilité à un dispositif de gestion d'informations de présence embarqué sur une passerelle résidentielle ou sur un modem/routeur multiservices (aussi appelés « home gateway » ou « residential gateway » en anglais), ou intégré au serveur d'un opérateur d'un réseau de communication (par exemple un opérateur téléphonique) ou au serveur d'un fournisseur de service sur internet.

### 2. Solutions et inconvénients de l'art antérieur

Actuellement, de plus en plus d'abonnés résidentiels possèdent chez eux une passerelle résidentielle ou un modem/routeur multiservices, du type LiveBox (marque déposée) ou Freebox (marque déposée) leur permettant d'accéder à de nouveaux services tels que l'accès Internet haut débit, les services de téléphonie et la télévision sur IP (« Internet Protocol » en anglais). Ces services de téléphonie sur IP pourraient permettre aux fournisseurs de service, d'offrir, entre autres, à l'utilisateur la possibilité d'adapter les services qui lui sont effectivement fournis, en fonction d'informations relatives à la présence et/ou la disponibilité de cet utilisateur à son domicile. Ceci suppose que l'utilisateur déclare un état de présence, par exemple « utilisateur absent » ou « utilisateur occupé », à un dispositif de gestion d'informations de présence. Ce dispositif de gestion d'informations de présence peut être soit intégré dans la passerelle résidentielle ou dans le modem/routeur multiservices, soit distant, connecté via un réseau de communication.

Actuellement les dispositifs permettant à l'utilisateur d'annoncer ses informations de présence sont des logiciels, déployés sur les ordinateurs, des assistants personnels (PDA), des téléphones portables, etc., ainsi l'utilisateur positionne ses informations de présence de façon déclarative sur son terminal, PC, PDA ou mobile. Cette déclaration de présence se fait au moyen d'un terminal de communication relié par liaison, filaire ou sans fil au réseau IP vers le serveur situé lui aussi sur le réseau IP. Ce terminal est par exemple un ordinateur portable ou non, un PDA (« Personal Digital Assistant » en anglais), et les liaisons au réseau IP peuvent être du type ethernet, WiFi (« Wireless Fidelity » en anglais), bluetooth, GPRS ou UMTS. Ce terminal de communication embarque à cet effet un logiciel permettant de saisir et transmettre vers le serveur de gestion de présence, des informations relatives à la présence de l'utilisateur, selon un protocole de communication prédéterminé.

Ce procédé d'acquisition d'informations de présence est bien adapté au cas des utilisateurs familiers à l'informatique. Cependant, pour les autres utilisateurs, il présente un certain nombre d'inconvénients. En effet, l'ergonomie de ce procédé connu est limitée par le fait que l'utilisateur doit tout d'abord lancer un logiciel embarqué sur un terminal de communication, puis entrer manuellement au moyen d'un clavier numérique, généralement de petite taille, un identifiant et un mot de passe, et donc, le cas échéant naviguer dans un menu pour sélectionner et cliquer sur l'icône correspondant à son état de présence.

Le menu de sélection est affiché sur l'écran du terminal de communication, généralement de taille réduite, obligeant ainsi l'utilisateur à prendre en main le terminal de communication et à se trouver bien en face de l'écran de manière à mieux distinguer les différentes icônes. Il faut généralement en outre disposer d'un éclairage adéquat, notamment lorsqu'il s'agit d'écrans LCD.

Quel que soit le type d'utilisateur, habitué ou allergique à l'informatique, un tel procédé nécessite au moins une saisie à partir d'un clavier alphanumérique, ce qui est contraignant et long.

En outre, et en particulier pour les raisons exposées ci-dessus, ce procédé d'acquisition d'informations de présence est mal adapté pour les enfants, les mères de familles aux bras encombrés de courses, les personnes à mobilité réduite, celles souffrant d'un handicap de la main ou de la vue, etc.

Par ailleurs, ce procédé ne permet pas d'offrir la gestion de la présence et/ou de la disponibilité sur des téléphones plus classiques, comportant uniquement un clavier alphanumérique, avec de petits écrans et sans systèmes d'exploitations permettant le déploiement d'applications logicielles. C'est le cas de la plupart des téléphones de type DECT (« Digital Enhanced Cordless Telephone » en anglais) classiques déployés actuellement dans les foyers français.

### 3. Objectifs de l'invention

L'invention a notamment pour objectif de pallier ces inconvénients de l'art antérieur. Plus précisément, un objectif de l'invention est de fournir une technique qui permette à un utilisateur de définir facilement et efficacement des informations relatives à un état de présence et/ou de disponibilité, sans devoir démarrer un terminal de type ordinateur même portable ni faire aucune manipulation particulière.

Un autre objectif de l'invention, dans au moins un mode de réalisation, est de fournir une technique qui permette à un utilisateur de connaître commodément et rapidement le dernier état de présence qu'il a configuré (état de présence courant).

Un autre objectif de l'invention est de fournir une telle technique, qui soit ergonomique et supprime, ou tout le moins limite, les opérations devant être effectuées par l'utilisateur.

Encore un autre objectif de l'invention est de fournir une telle technique, qui soit notamment bien adaptée aux personnes à mobilité réduite, celles souffrant d'un handicap de la main ou de la vue.

L'invention a également pour objectif de fournir une telle technique, qui soit simple à mettre en oeuvre et peu coûteuse.

### 4. Résumé de l'invention

Ces objectifs, ainsi que d'autres qui apparaîtront par la suite, sont atteints à l'aide d'un procédé d'obtention d'informations relatives à la présence et/ou la disponibilité d'au moins un utilisateur. Selon l'invention, un tel procédé comprend avantageusement :
- une phase de configuration comprenant une étape d'enregistrement de premiers multiplets d'informations associant chacun une identité d'utilisateur, une expression composée d'au moins un mot et au moins une information de présence et/ou disponibilité ;
- une phase d'utilisation comprenant les étapes suivantes, quand un utilisateur donné prononce une expression :
   * obtention, par reconnaissance vocale, de l'identité de l'utilisateur donné et de l'expression prononcée par l'utilisateur donné ;
   * parmi les premiers multiplets d'informations enregistrés, identification de celui comprenant l'identité de l'utilisateur donné et l'expression prononcée par l'utilisateur donné ;
   * lecture de ladite au moins une information de présence et/ou disponibilité comprise dans le premier multiplet identifié, de façon à obtenir au moins une information de présence et/ou disponibilité courante pour l'utilisateur donné.

Ainsi, l'invention repose sur une approche tout à fait nouvelle et inventive pour l'acquisition d'informations relatives à un état de présence et/ou de disponibilité d'un utilisateur. En effet, l'invention s'appuie sur la reconnaissance vocale, qui ne nécessite donc aucune action manuelle particulière de l'utilisateur. Il est important de noter que la technique de l'invention est sécurisée par le fait que l'état de présence et/ou disponibilité d'un utilisateur donné ne peut être modifié que par cet utilisateur donné. En effet, cette modification est conditionnée par le fait que l'utilisateur soit identifié par les caractéristiques de sa voix (son timbre, son intonation de voix,...), que l'expression prononcée soit reconnue et enfin qu'il existe un multiplet d'informations, préalablement enregistré, contenant cet identifiant d'utilisateur et cette expression. Selon l'invention, l'utilisateur a donc au préalable enregistré, par exemple dans une table de données, des premiers multiplets d'informations associant chacun une identité d'utilisateur, une expression et au moins une information de présence et/ou disponibilité. Dans un cas particulier, le multiplet d'informations est un triplet d'informations lorsqu'il contient une identité d'utilisateur, une expression et une information de présence et/ou disponibilité. Par ailleurs l'expression prononcée par l'utilisateur peut être composée d'un ou plusieurs éléments vocaux tels que par exemple une lettre, un mot, une phrase, une onomatopée, etc.

Avantageusement, un utilisateur peut associer une information de présence et/ou disponibilité à chaque élément vocal d'une expression, de façon à obtenir un multiplet d'informations permettant de défmir une configuration de service plus précise. Il est à noter qu'un tel multiplet d'informations peut en outre comporter une information relative à une sonnerie.

De façon préférentielle, chaque multiplet comprend une première et au moins une seconde information de présence et/ou disponibilité, ladite première information de présence et/ou disponibilité est une information générale relative à la présence et/ou la disponibilité dudit utilisateur, et ladite seconde information de présence et/ou disponibilité est une information de filtrage permettant de limiter l'utilisation de la première information de présence et/ou disponibilité à au moins un groupe d'appelant comprenant au moins un appelant déterminé.

Par groupe d'appelant, on entend par exemple une somme d'identités basées principalement sur des numéros de téléphones. Un tel groupe peut être défmi dans une table de données différente de celle contenant les premiers multiplets d'informations. Optionnellement, la seconde information de présence et/ou disponibilité permet automatiquement d'associer une information de présence (par exemple « présent ») à un groupe, et une autre information de présence (par exemple « absent ») à un autre groupe.

De façon avantageuse, le procédé comprend en outre une étape de transmission de ladite au moins une information de présence et/ou disponibilité courante à au moins un dispositif de gestion d'informations de présence.

Dans un mode de réalisation préférentiel de l'invention, le procédé est mis en oeuvre dans une passerelle résidentielle ou dans un modem/routeur multiservices, le ou les dispositif(s) de gestion d'informations de présence étant situé(s) dans ladite passerelle résidentielle ou ledit modem/routeur multiservices et/ou dans un serveur relié à ladite passerelle résidentielle ou audit modem/routeur multiservices via un réseau de communication.

Avantageusement, l'étape d'obtention, par reconnaissance vocale, de l'identité de l'utilisateur donné est basée sur une technique de reconnaissance du timbre de la voix de l'utilisateur donné.

Préférentiellement, les informations de présence et/ou disponibilité comprises dans les premiers multiplets d'informations appartiennent au groupe comprenant :
- « utilisateur présent et disponible » ;
- « utilisateur absent » ;
- « utilisateur présent mais indisponible ».

Par absent, on entend tout type d'absence d'un utilisateur par exemple du fait d'un éloignement de sa demeure, de sa résidence ordinaire ou du lieu où l'on doit le trouver (utilisateur parti faire les courses, en conférence, etc...).

Selon un aspect avantageux de l'invention, ladite phase de configuration comprend en outre une étape d'enregistrement de seconds multiplets d'informations associant chacun une identité d'utilisateur, une expression et au moins une action, et ladite phase d'utilisation comprend en outre les étapes suivantes, quand un utilisateur donné prononce une expression :
- obtention, par reconnaissance vocale, de l'identité de l'utilisateur donné et de l'expression prononcée par l'utilisateur donné ;
- parmi les seconds multiplets d'informations enregistrés, identification de celui comprenant l'identité de l'utilisateur donné et l'expression prononcée par l'utilisateur donné ;
- exécution de ladite au moins une action comprise dans le second multiplet identifié.

De façon préférentielle, les actions comprises dans les seconds multiplets d'informations appartiennent au groupe comprenant :
- « fournir l'information de présence et/ou disponibilité courante pour l'utilisateur donné et/ou pour au moins un autre utilisateur déterminé » ;
- « fournir une liste d'expressions comprenant des expressions déjà enregistrées et/ou des expressions disponibles, pour l'utilisateur donné et/ou pour au moins un autre utilisateur déterminé ».

De façon avantageuse, chacun des multiplets d'informations comprend une expression distincte.

L'invention concerne également, un produit programme d'ordinateur comprenant des instructions de code de programme pour l'exécution des étapes du procédé précité, lorsque ledit programme est exécuté sur un ordinateur.

Par ordinateur, on entend toute machine comprenant au moins une unité de traitement équipée d'un microprocesseur, telle qu'une passerelle résidentielle ou un modem/routeur multiservice.

L'invention concerne aussi, un moyen de stockage, éventuellement totalement ou partiellement amovible, lisible par un ordinateur, stockant un jeu d'instructions exécutables par ledit ordinateur pour mettre en oeuvre le procédé précité.

L'invention concerne en outre, un dispositif d'obtention d'informations relatives à la présence et/ou la disponibilité d'au moins un utilisateur, comprenant :
- des moyens d'enregistrement de premiers multiplets d'informations associant chacun une identité d'utilisateur, une expression composée d'au moins un mot et au moins une information de présence et/ou disponibilité;
- des moyens d'obtention, par reconnaissance vocale, de l'identité d'un utilisateur donné ayant prononcé une expression et de l'expression prononcée par ledit utilisateur donné ;
- des moyens d'identification, parmi les premiers multiplets d'informations enregistrés, de celui comprenant l'identité de l'utilisateur donné et l'expression prononcée par l'utilisateur donné ;
- des moyens de lecture de ladite au moins une information de présence et/ou disponibilité comprise dans le premier multiplet identifié, de façon à obtenir au moins une information de présence et/ou disponibilité courante pour l'utilisateur donné.

Préférentiellement, le dispositif comprend en outre des moyens de transmission de ladite au moins une information de présence et/ou disponibilité courante à au moins un dispositif de gestion d'informations de présence.

De façon avantageuse, le dispositif est compris dans une passerelle résidentielle ou dans un modem/routeur multiservices, le ou les dispositif(s) de gestion d'informations de présence étant situé(s) dans ladite passerelle résidentielle ou ledit modem/routeur multiservices et/ou dans un serveur relié à ladite passerelle résidentielle ou audit modem/routeur multiservices via un réseau de communication.

De façon préférentielle, le dispositif comprend en outre :
- des moyens d'enregistrement de seconds multiplets d'informations associant chacun une identité d'utilisateur, une expression et au moins une action ;
- des moyens d'identification, parmi les seconds multiplets d'informations enregistrés, de celui comprenant l'identité de l'utilisateur donné et l'expression prononcée par l'utilisateur donné ;
- des moyens d'exécution de ladite au moins une action comprise dans le second multiplet identifié.

L'invention concerne également, un terminal de communications comprenant le dispositif d'obtention d'informations précité.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un premier mode de réalisation du dispositif d'obtention d'informations selon l'invention, quand il est compris dans une passerelle résidentielle ou dans un modem/routeur multiservices et transmet ces informations à un dispositif de gestion d'informations de présence également compris dans cette passerelle résidentielle ou ce modem/routeur multiservices ;
- la figure 2 présente un second mode de réalisation du dispositif d'obtention d'informations selon l'invention, quand il est compris dans une passerelle résidentielle ou dans un modem/routeur multiservices et transmet ces informations à un dispositif de gestion d'informations de présence et/ou de disponibilité distant, connecté au modem/routeur multiservices ou à la passerelle résidentielle via un réseau de communication ;
- la figure 3 représente un organigramme d'un mode de réalisation particulier du procédé d'obtention d'informations de l'invention ;
- la figure 4 présente un exemple de table de données selon l'invention, dans laquelle sont enregistrés des triplets d'informations ;
- la figure 5 présente un exemple de table de données selon l'invention, dans laquelle sont enregistrés des informations de présence correspondant à des groupes d'appelant ; et
- La figure 6 présente la structure d'un mode de réalisation particulier d'un dispositif d'obtention d'informations de présence et/ou disponibilité selon l'invention.

### 6. Description détaillée

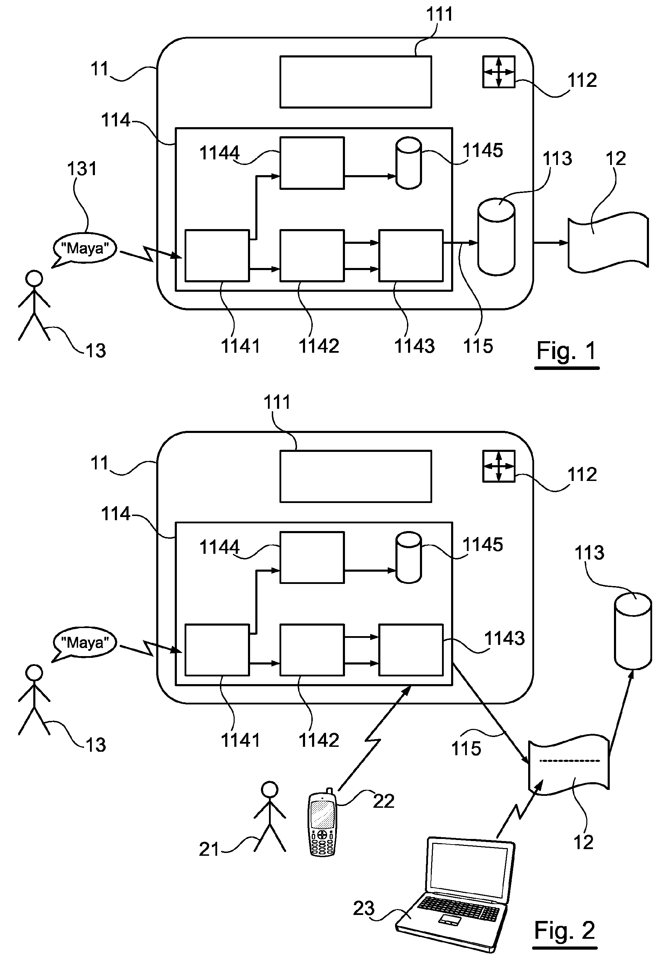

L'invention vise donc à fournir une technique d'obtention d'informations relatives à la présence et/ou la disponibilité d'un utilisateur. Dans la suite de la description, on suppose à titre d'exemple que le dispositif d'obtention d'informations selon l'invention est compris dans un modem/routeur multiservices ou dans une passerelle résidentielle (par exemple la « LiveBox » de Wanadoo), et transmet les informations obtenues à un dispositif de gestion d'informations de présence et/ou de disponibilité également compris dans cet équipement résidentiel multiservices (figure 1) ou distant (figure 2).

Comme on le notera, sur toutes les figures du présent document, les éléments identiques sont désignés par une même référence numérique.

Par souci de simplification de la description, on se limitera, dans toute la suite de ce document, à décrire le cas particulier d'un multiplet d'informations (aussi appelé par la suite triplet d'informations) contenant uniquement une identité d'utilisateur, une expression et une information de présence et/ou disponibilité ou une action à réaliser.

La figure 1 illustre un premier mode de réalisation de l'invention. Un modem/routeur multiservices résidentiel 11 de type classique en soi, comprenant notamment un écran 111, par exemple de type LCD et permettant la présentation du numéro de la ligne appelante, du nom de l'appelant ou d'autres informations liées à la consultation de l'état de présence et/ou de disponibilité de la personne qui l'interroge, des touches de sélection 112 et un dispositif de gestion d'informations de présence et/ou de disponibilité 113. Ce modem/routeur multiservices résidentiel 11 est connecté au réseau opérateur 12, par exemple de type RTC (Réseau Téléphonique Commuté).

Selon l'invention, ce modem/routeur multiservices résidentiel 11 est équipé d'un dispositif d'obtention d'informations de présence et/ou disponibilité 114, comprenant lui même des moyens de réception d'informations audio 1141, par exemple de type microphone, des moyens de traitement des informations audio reçus 1142, des moyens de lecture de l'information de présence et/ou disponibilité 1143, des moyens d'enregistrement de triplets d'informations 1144, et des moyens de stockage de triplets d'informations 1145 (aussi appelés table de données).

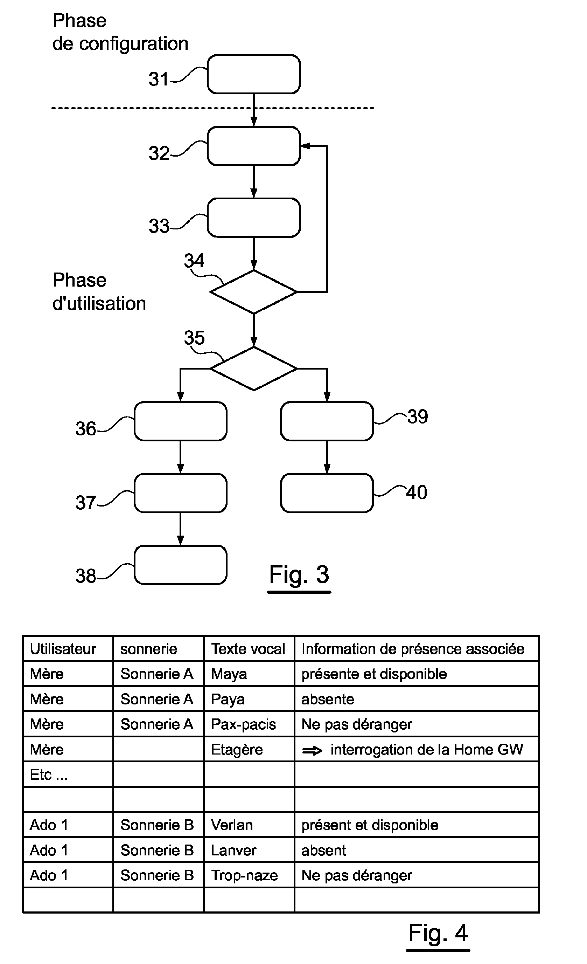

Comme on le verra en relation avec la figure 3, le procédé d'obtention d'informations de présence et/ou disponibilité selon un mode de réalisation préférentiel de l'invention, comprend avantageusement, avant utilisation, une étape d'initialisation consistant à enregistrer des triplets d'informations dans la table de données.

Dans ce premier mode de réalisation, l'enregistrement des triplets d'informations s'effectue au moyen des moyens de réception 1141. À cet effet, un ou plusieurs utilisateurs 13 (par exemple les membres d'une famille) prononcent chacun leur tour, et dans l'ordre suivant, une identité d'utilisateur, une expression (par exemple un ou plusieurs mots ou onomatopées) et une information de présence ou une action particulière à réaliser (par exemple la fourniture de l'état de présence courant). Notamment, chaque utilisateur peut choisir X mot(s) clé(s) ou expression(s) qu'il associe à une information de présence ou à une action particulière. Les mots clés ou expressions peuvent être spécifiques à chaque utilisateur, ce qui permet de réduire davantage les sources d'erreurs.

Ces informations audio sont ensuite transmises vers les moyens d'enregistrement 1144 qui vérifient la validité de chaque triplet (par exemple si le triplet d'information comporte bien trois informations) avant leur enregistrement dans une table de données 1145.

Dans un premier mode de réalisation, comme illustré par la figure 4, la table de données, est composée de quatre colonnes, dont les première, troisième et quatrième colonne contiennent respectivement l'identité de l'utilisateur, l'expression prononcée et l'information de présence ou l'action à réaliser (c'est à dire les triplets d'informations précités). La deuxième colonne de la table de données contient les informations personnelles de sonnerie de chaque utilisateur. Il est à noter que les informations de sonnerie peuvent être définies dans une table de données différente de celle contenant les premiers multiplets d'informations précités.

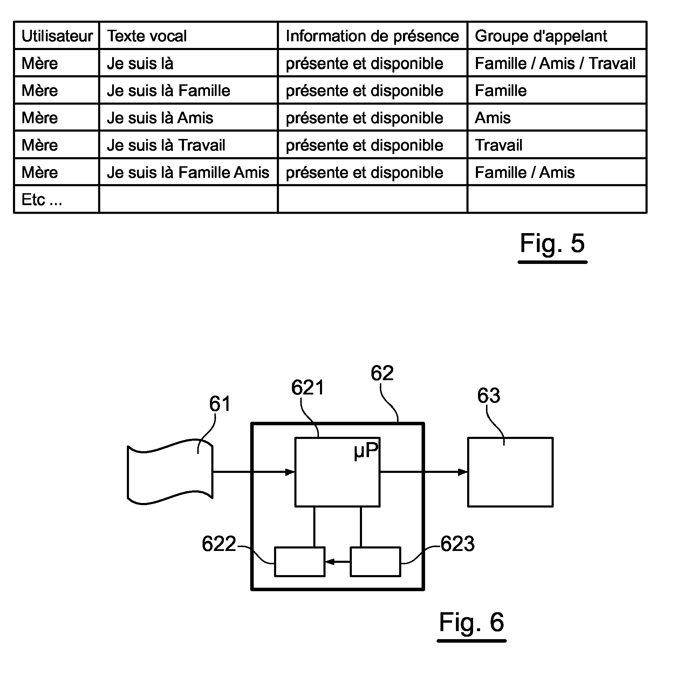

Dans un second mode de réalisation, comme illustré par **la figure 5,** la table de données, est composée de quatre colonnes, dont les première, seconde, troisième et quatrième colonne contiennent respectivement l'identité de l'utilisateur, l'expression prononcée, l'information de présence ou l'action à réaliser et le groupe d'appelant associé. L'utilisation de la quatrième colonne est optionnelle et l'expression "Je suis là" seule correspond par défaut au groupe « tous », c'est-à-dire que tous les appels entrants sont acceptés. Lorsque l'utilisateur prononce par exemple l'expression « Je suis là Famille », l'élément vocal « Je suis là » est associé à l'information de présence « présente et disponible » et l'élément vocal « Famille » défini le groupe d'appelant pour lequel cette information de présence est applicable. Optionnellement, lorsque l'utilisateur prononce l'expression « Je suis là Famille », les autres groupes d'appelant « Amis » et « Travail » sont associés à l'information de présence « absente ».

Dans une variante de réalisation, on peut également envisager d'effectuer l'enregistrement des triplets d'informations au moyen des touches de sélection 112 et des moyens de réception 1141.

Lors de l'utilisation, les moyens de réception 1141 vont permettrent l'acquisition à distance d'un mot clé ou d'une expression 131 prononcée par un utilisateur 13 présent à son domicile. Les moyens de traitement 1142, quant à eux, vont permettrent de connaître l'identité de l'utilisateur 13, par exemple à partir du timbre de la voix de ce dernier, et d'extraire l'expression 131 du bruit ambiant. Ces techniques de traitement par reconnaissance vocale sont bien connues de l'Homme du Métier, et ne sont donc pas décrites en détail dans ce document. Enfin, les moyens de lecture 1143 vont permettent de chercher et de lire, dans la table de données 1145, l'information de présence associée à l'expression 131. Cette information de présence 115 est transmise vers le dispositif de gestion d'informations de présence 113, selon un protocole de communication prédéterminé. Ainsi, un tel procédé selon l'invention permet à un utilisateur de définir un état de présence, par exemple « utilisateur absent » ou « utilisateur occupé », de sorte qu'en présence d'un appel entrant, et en fonction de l'état de présence choisi, le dispositif de gestion d'informations de présence accepte ou refuse l'appel.

Comme illustré par la figure 2, le dispositif de gestion d'informations de présence 113 peut-être connecté à la passerelle résidentielle ou au modem/routeur multiservices 11 via un réseau de communication 12. Dans ce second mode de réalisation, l'information de présence 115 est transmise vers le dispositif de gestion d'informations de présence 113, via le réseau de communication 12, selon un protocole de communication prédéterminé. Un tel procédé selon l'invention permet en outre à un utilisateur 21 qui a une extinction de voix (altération du timbre de voix de l'utilisateur) ou qui a oublié de spécifier ses informations de présence en quittant son domicile, de pouvoir les définir au moyen d'un terminal de communication 22, 23, venant se connecter au dispositif de gestion d'informations de présence 113 depuis un site distant (réseau filaire ou par une liaison sans fil, par exemple de type IP, GSM), et par exemple via une interface web si le serveur de gestion de présence et/ou de disponibilité intégré possède un serveur web.

D'autres types de mise en oeuvre peuvent bien sûr être envisagés, par exemple la fonctionnalité de l'invention peut être assurée par un boîtier annexe (non représenté), venant en complément de la passerelle résidentielle ou du modem/routeur multiservices 11. Ce boîtier annexe (non représenté) peu par exemple venir se connecter par une liaison filaire, par exemple de type USB, ou encore par une liaison sans fil, par exemple de type Bluetooth.

On présente maintenant, en relation avec la figure 3, un mode de réalisation particulier du procédé selon l'invention d'obtention d'informations, qui permettent à un utilisateur de spécifier un état de présence à un dispositif de gestion d'informations de présence.

Une phase de configuration comprend une première étape 31, au cours de laquelle l'utilisateur enregistre dans la table de données 1145 des premiers triplets d'informations associant chacun une identité d'utilisateur, une expression et une information de présence et/ou de disponibilité, et des seconds triplets d'informations associant chacun une identité d'utilisateur, une expression et une action à réaliser. Lors de cette étape, les informations dictées par l'utilisateur, sont captées par les moyens de réception 1141. Les triplets d'informations peuvent être complétés par une information relative à la sonnerie spécifique à chaque utilisateur (cf. figure 4).

Il est à noter que ces triplets peuvent être complétés ou modifiés à loisir et à tout moment par l'utilisateur tout au long de la vie du produit via ces moyens de réception.

Les étapes suivantes sont relatives à une phase d'utilisation.

Lors de l'étape 32 suivante, les moyens de réception 1141 détectent toute activité vocale de l'utilisateur.

Lors de l'étape 33, l'activité vocale de l'utilisateur est traitée par des moyens de traitement 1142, de façon à vérifier d'une part l'identité de l'utilisateur, à partir de ses caractéristiques de voix (son timbre de voix,...), et d'autre part si l'utilisateur a prononcé un mot clé ou une expression, qu'il a au préalable enregistré dans la table de données.

Si le couple d'informations formé par le timbre de voix et l'expression prononcée par l'utilisateur n'est pas valide (car non enregistré dans la table de données), on retourne à l'étape 32, sinon on passe à une étape 35.

Lors de cette étape 35, on détermine si l'utilisateur a prononcé une expression appartenant à un premier ou à un second triplet d'informations. Si l'expression appartient à un premier triplet, on passe à une étape 36, sinon on passe à une étape 39.

Lors de l'étape 36, les moyens de lecture 1143 lisent la table de données de façon à extraire, en fonction du couple d'information comprenant l'identité de l'utilisateur et l'expression prononcée, l'information préenregistrée relative à la présence de l'utilisateur.

Ensuite, lors de l'étape 37, cette information relative à la présence de l'utilisateur est mise en forme selon un protocole de messagerie instantanée, par exemple du type XMPP, SIMPLE,... compatible avec le dispositif de gestion d'informations de présence.

Enfin, lors de l'étape 38, l'information relative à la présence de l'utilisateur est transmise vers le dispositif de gestion d'informations de présence, selon un protocole de communication prédéterminé.

Lors de l'étape 39, les moyens de lecture 1143 lisent la table de données de façon à extraire, en fonction du couple d'information comprenant l'identité de l'utilisateur et l'expression prononcée, l'action préenregistrée à exécuter.

Lors de l'étape 40, le dispositif d'obtention d'informations de présence 114 exécute l'action demandée par l'utilisateur.

L'invention prévoit avantageusement d'afficher les informations (dernière information de présence, liste d'expressions) demandées par l'utilisateur sur l'écran LCD du modem/routeur multiservices, ou encore d'utiliser un haut parleur pour les restituer.

La **figure 6** présente enfin la structure d'un dispositif d'obtention d'informations de présence et/ou disponibilité 62 selon l'invention, qui comprend une mémoire 622, et une unité de traitement 621 équipée d'un microprocesseur µP, qui est piloté par un programme d'ordinateur (ou application) 623. L'unité de traitement 621 reçoit en entrée une expression 61 prononcée par un utilisateur ou saisie manuellement par ce dernier via une interface homme-machine (par exemple un clavier alphanumérique). Le microprocesseur µP traite cette expression, selon les instructions du programme 623, pour générer des informations de présence et/ou disponibilité, qui sont transmises vers un serveur de gestion de présence 63.

En résumé, le procédé et le dispositif d'obtention d'informations relatives à la présence et/ou la disponibilité d'au moins un utilisateur, tels que proposés par l'invention, présentent de nombreux avantages, dont une liste non exhaustive est donnée ci-dessous :
- amélioration de l'ergonomie pour la spécification d'un état de présence. En effet, l'invention permet à un utilisateur de définir facilement et efficacement des informations relatives à un état de présence et/ou de disponibilité, sans devoir prendre en main un terminal de communication, ni faire aucune manipulation particulière avec un clavier ou une souris de pointage. L'invention présente donc un intérêt particulier pour les personnes à faible mobilité, ou souffrant d'un handicap de la main ;
- amélioration de la sécurisation des informations personnelles enregistrées dans la passerelle résidentielle ou le modem/routeur multiservices par un utilisateur donné. En effet, l'invention est basée sur l'identification du timbre de la voix d'un utilisateur.

## Revendications

1. Procédé d'obtention d'informations relatives à la présence et/ou la disponibilité d'au moins un utilisateur, **caractérisé en ce qu'**il comprend :
- une phase de configuration comprenant une étape d'enregistrement (31) de premiers multiplets d'informations associant chacun une identité d'utilisateur, une expression composée d'au moins un mot et au moins une information de présence et/ou disponibilité ;
- une phase d'utilisation comprenant les étapes suivantes, quand un utilisateur donné prononce une expression :
* obtention (32), par reconnaissance vocale, de l'identité de l'utilisateur donné et de l'expression prononcée par l'utilisateur donné ;
* parmi les premiers multiplets d'informations enregistrés, identification (33) de celui comprenant l'identité de l'utilisateur donné et l'expression prononcée par l'utilisateur donné ;
* lecture (36) de ladite au moins une information de présence et/ou disponibilité comprise dans le premier multiplet identifié, de façon à obtenir au moins une information de présence et/ou disponibilité courante pour l'utilisateur donné.

2. Procédé selon la revendication 1, **caractérisé en ce que** chaque multiplet comprend une première et au moins une seconde information de présence et/ou disponibilité, et **en ce que** :
- ladite première information de présence et/ou disponibilité est une information générale relative à la présence et/ou la disponibilité dudit utilisateur ;
- ladite seconde information de présence et/ou disponibilité est une information de filtrage permettant de limiter l'utilisation de la première information de présence et/ou disponibilité à au moins un groupe d'appelant comprenant au moins un appelant déterminé.

3. Procédé selon la revendication 1, **caractérisé en ce qu'**il comprend en outre une étape de transmission de ladite au moins une information de présence et/ou disponibilité courante à au moins un dispositif de gestion d'informations de présence (113).

4. Procédé selon la revendication 3, **caractérisé en ce qu'**il est mis en oeuvre dans une passerelle résidentielle ou dans un modem/routeur multiservices (11), et **en ce que** le ou les dispositif(s) de gestion d'informations de présence (113) est (sont) situé(s) dans ladite passerelle résidentielle ou ledit modem/routeur multiservices (11) et/ou dans un serveur relié à ladite passerelle résidentielle ou audit modem/routeur multiservices via un réseau de communication (12).

5. Procédé selon l'une quelconque des revendications 1 à 4, **caractérisé en ce que** l'étape d'obtention (32), par reconnaissance vocale, de l'identité de l'utilisateur donné est basée sur une technique de reconnaissance du timbre de la voix de l'utilisateur donné.

6. Procédé selon l'une quelconque des revendications 1 à 5, **caractérisé en ce que** les informations de présence et/ou disponibilité comprises dans les premiers multiplets d'informations appartiennent au groupe comprenant :
- « utilisateur présent et disponible » ;
- « utilisateur absent » ;
- « utilisateur présent mais indisponible ».

7. Procédé selon l'une quelconque des revendications 1 à 6, **caractérisé en ce que** ladite phase de configuration comprend en outre une étape d'enregistrement (31) de seconds multiplets d'informations associant chacun une identité d'utilisateur, une expression et au moins une action, et **en ce que** ladite phase d'utilisation comprend en outre les étapes suivantes, quand un utilisateur donné prononce une expression :
* obtention (32), par reconnaissance vocale, de l'identité de l'utilisateur donné et de l'expression prononcée par l'utilisateur donné ;
* parmi les seconds multiplets d'informations enregistrés, identification (39) de celui comprenant l'identité de l'utilisateur donné et l'expression prononcée par l'utilisateur donné ;
* exécution (40) de ladite au moins une action comprise dans le second multiplet identifié.

8. Procédé selon la revendication 7, **caractérisé en ce que** les actions comprises dans les seconds multiplets d'informations appartiennent au groupe comprenant :
- « fournir l'information de présence et/ou disponibilité courante pour l'utilisateur donné et/ou pour au moins un autre utilisateur déterminé » ;
- « fournir une liste d'expressions comprenant des expressions déjà enregistrées et/ou des expressions disponibles, pour l'utilisateur donné et/ou pour au moins un autre utilisateur déterminé ».

9. Procédé selon l'une quelconque des revendications 1 à 8, **caractérisé en ce que** chacun des multiplets d'informations comprend une expression distincte.

10. Produit programme d'ordinateur (623), **caractérisé en ce qu'**il comprend des instructions de code de programme pour l'exécution des étapes du procédé selon l'une quelconque des revendications 1 à 9, lorsque ledit programme est exécuté sur un ordinateur.

11. Moyen de stockage (622), éventuellement totalement ou partiellement amovible, lisible par un ordinateur, stockant un jeu d'instructions exécutables par ledit ordinateur pour mettre en oeuvre le procédé selon l'une quelconque des revendications 1 à 9.

12. Dispositif d'obtention d'informations relatives à la présence et/ou la disponibilité (114) d'au moins un utilisateur, **caractérisé en ce qu'**il comprend :
- des moyens d'enregistrement (1144) de premiers multiplets d'informations associant chacun une identité d'utilisateur, une expression composée d'au moins un mot et au moins une information de présence et/ou disponibilité;
- des moyens d'obtention (1141), par reconnaissance vocale, de l'identité d'un utilisateur donné ayant prononcé une expression et de l'expression prononcée par ledit utilisateur donné ;
- des moyens d'identification (1142), parmi les premiers multiplets d'informations enregistrés, de celui comprenant l'identité de l'utilisateur donné et l'expression prononcée par l'utilisateur donné ;
- des moyens de lecture (1143) de ladite au moins une information de présence et/ou disponibilité comprise dans le premier multiplet identifié, de façon à obtenir au moins une information de présence et/ou disponibilité courante pour l'utilisateur donné.

13. Dispositif selon la revendication 12, **caractérisé en ce qu'**il comprend en outre des moyens de transmission de ladite au moins une information de présence et/ou disponibilité courante à au moins un dispositif de gestion d'informations de présence (113).

14. Dispositif selon la revendication 13, **caractérisé en ce qu'**il est compris dans une passerelle résidentielle ou dans un modem/routeur multiservices (11), et **en ce que** le ou les dispositif(s) de gestion d'informations de présence (113) est (sont) situé(s) dans ladite passerelle résidentielle ou ledit modem/routeur multiservices et/ou dans un serveur relié à ladite passerelle résidentielle ou audit modem/routeur multiservices via un réseau de communication (12).

15. Dispositif selon l'une quelconque des revendications 12 à 14, **caractérisé en ce qu'**il comprend en outre :
- des moyens d'enregistrement (1144) de seconds multiplets d'informations associant chacun une identité d'utilisateur, une expression et au moins une action ;
- des moyens d'identification (1142), parmi les seconds multiplets d'informations enregistrés, de celui comprenant l'identité de l'utilisateur donné et l'expression prononcée par l'utilisateur donné ;
- des moyens d'exécution de ladite au moins une action comprise dans le second multiplet identifié.

16. Terminal de communications, **caractérisé en ce qu'**il comprend un dispositif d'obtention d'informations selon l'une quelconque des revendications 12 à 15.
